# EUROPÄISCHE PATENTSCHRIFT

(11) **EP 4 217 616 B1**
(45) Veröffentlichungstag und Bekanntmachung des Hinweises auf die Patenterteilung: **23.10.2024**
(21) Anmeldenummer: 21783466.2
(22) Anmeldetag: 24.09.2021
(51) Int. Cl.: F16B 31/06, F16B 39/10, H01R 4/00, F03D 17/00, G01M 5/00, F16B 1/00

(54) **ÜBERWACHUNGSAUFSATZ ZUR ÜBERWACHUNG EINER MUTTER EINER SCHRAUBVERBINDUNG**
MONITORING ATTACHMENT FOR MONITORING A NUT OF A SCREW CONNECTION
ÉLÉMENT RAPPORTÉ DE SURVEILLANCE PERMETTANT DE SURVEILLER UN ÉCROU D'UN ASSEMBLAGE VISSÉ

(30) Priorität: 24.09.2020 DE 202020105477 U
(43) Veröffentlichungstag der Anmeldung: 02.08.2023
(73) Patentinhaber: Weidmüller Interface GmbH & Co. KG, 32758 Detmold (DE)
(72) Erfinder: BÖCKER, Marc, 32839 Steinheim (DE); NIGGEMANN, Steffen, 33106 Paderborn (DE); SCHUMACHER, Ralf, 32657 Lemgo (DE); BUSCH, Gerald, 32791 Lage (DE); HEGGEMANN, Christian, 32758 Detmold (DE)
(74) Vertreter: Kleine, Hubertus
(86) Internationale Anmeldenummer: PCT/EP2021/076345
(87) Internationale Veröffentlichungsnummer: WO 2022/063978

(56) Entgegenhaltungen:
- EP-B1- 3 047 144
- WO-A1-2018/007143

## Beschreibung

Die Erfindung betrifft einen Überwachungsaufsatz zur Überwachung einer Mutter einer Schraubverbindung auf Rissbildung, Deformation und/oder Bruch, wobei der Überwachungsaufsatz eine Leiterschleife aufweist, die um einen Außenumfang der Mutter geführt ist und die bei einer Deformation, einem Riss und/oder einem Bruch der Mutter unterbrochen wird.

Muttern von hochbelasteten Schraubverbindungen, z. B. in Windenergieanlagen, werden aus Sicherheitsgründen überwacht, um eine Beschädigung möglichst zeitnah zu detektieren. Derartige hochbelastete Schraubverbindungen in Windkraftanlagen sind i. d. R. Teil von Flanschverbindungen, bei denen eine Vielzahl von Schraubverbindungen am Umfang des Flansches angeordnet ist. Wird ein Bruch einer oder mehrerer Muttern detektiert, können diese getauscht werden, bevor ein Bruch der gesamten Flanschverbindung droht. Auf diese Weise können personengefährdende und/oder wirtschaftliche Folgeschäden vermieden werden.

Aus der Druckschrift EP 3 047 144 B1 ist ein derartiger Überwachungsaufsatz beschrieben, der einen als Mutternkappe ausgebildeten Überwachungskörper aufweist, der die Mutter radial an ihrem Umfang umgibt. Bei Beschädigung, z. B. bei einem Aufplatzen der Mutter, wird auch der Überwachungskörper zerstört. Der Überwachungskörper weist einen umlaufenden elektrischen Leiter in Form einer elektrisch leitenden Beschichtung auf. Eine Zerstörung des Überwachungskörpers führt zu einer Unterbrechung der elektrischen Leitung, die detektiert wird.

Funktionell hat sich diese Ausgestaltung bewährt, sie kann jedoch nach Bruch des Überwachungskörpers nicht wiederverwendet werden. Ein weiterer Nachteil ist, dass der nur durch einen Lack geschützte elektrische Leiter anfällig gegen Korrosion ist, was beispielsweise bei Offshore-Windkraftanlagen mit einer salzhaltigen Umgebungsluft problematisch sein kann.

Die Druckschrift WO 2018/007143 A1 beschreibt ebenfalls einen in Form einer Hülse ausgebildeten Überwachungsaufsatz, bei dem ein Leiter in ein Material, beispielsweise ein elektrisch nichtleitendes Polymermaterial eingebettet ist, wodurch eine größere Resistenz gegen korrodierende Umgebungsbedingungen erzielt wird. Auch hierbei wird der Überwachungsaufsatz bei einem Mutterbruch zerstört, was zu einer Leitungsunterbrechung führt. Eine Wiederverwendbarkeit ist bei dieser Ausgestaltung ebenfalls nicht gegeben.

Es ist eine Aufgabe der vorliegenden Erfindung, einen Überwachungsaufsatz der eingangs genannten Art zu schaffen, der bei einer Deformation, einer Rissbildung und/oder einem Bruch einer Mutter diese bzw. diesen sicher detektiert, der möglichst resistent gegen korrodierende Umgebungsbedingungen ist und der nach einem Auslösen wiederverwendbar ist.

Diese Aufgabe wird durch einen Überwachungsaufsatz mit den Merkmalen des unabhängigen Anspruchs 1 gelöst. Die vorteilhafte Ausgestaltung und Weiterbildungen sind Gegenstand der abhängigen Ansprüche.

Ein erfindungsgemäßer Überwachungsaufsatz der eingangs genannten Art weist mindestens zwei die Mutter an ihrem Umfang gemeinsam umschließende Segmente auf, die an mindestens einer Verbindungsstelle kraftschlüssig zusammengehalten sind, wobei die Leiterschleife an der Verbindungsstelle über Kontakte geführt ist.

Erfindungsgemäß ist somit mindestens eine Verbindungsstelle zwischen den Segmenten mit einer kraftschlüssig geschlossenen Verbindung versehen, die bei einem Bruch, einem Riss und/oder einer sonstigen Beschädigung oder Deformation der Mutter geöffnet wird, wodurch ein (elektrischer) Kontakt, der innerhalb der Verbindung etabliert ist, unterbrochen wird. Dabei wird die Verbindung gegen eine Zuhaltekraft zerstörungsfrei geöffnet, so dass nach einem Tauschen der beschädigten Mutter der Überwachungsaufsatz wiederverwendet werden kann.

Da die Leiterschleife durch Öffnen des Kontakts unterbrochen wird, und nicht durch Zerreißen des Leiters, kann sie mit einer ausreichend dicken Isolierung versehen werden, die auch vor Korrosion schützt. Beispielsweise kann die Leiterschleife in ein Gießharz eingebettet sein. Die Kontakte können nach außen hin an der Verbindungsstelle ebenfalls gegen Umwelteinflüsse abgedichtet werden, so dass sich insgesamt eine hohe Resistenz gegen korrodierende Umgebungsbedingungen umsetzen lässt.

Bevorzugt sind die Kontakte elektrische Kontakte und die Leiterschleife ist eine Schleife eines elektrischen Leiters. Im Rahmen der Erfindung ist unter einer Leiterschleife aber ebenso eine Schleife eines Lichtleiters zu verstehen und als Kontakt auch ein lichtleitender Übergang von einem Segment auf ein benachbartes Segment. Ein Aufweiten der Verbindungsstelle führt bei einer nachfolgenden optischen Detektion zu einer geringeren optischen Transmission durch diese Verbindungsstelle, die analog zu einem ansteigenden elektrischen Widerstand detektiert werden kann.

In einer vorteilhaften Ausgestaltung des Überwachungsaufsatzes sind zwei halbkreisförmige, sich zu einem die Mutter umschließenden Ring ergänzende Segmente und entsprechend zwei Verbindungsstellen vorhanden. Prinzipiell können auch mehr als zwei Segmente verwendet werden. Es hat sich jedoch gezeigt, dass bereits mit zwei Segmenten eine hohe Auslöseempfindlichkeit bei einer Beschädigung der Mutter erreicht wird.

Bevorzugt ist an mindestens einer Verbindungsstelle eine Steckverbindung vorgesehen, bei der eines der Segmente einen Steckabschnitt und ein anderes der Segmente einen Aufnahmeabschnitt aufweist, in den der Steckabschnitt einsteckbar ist. Eine solche Steckverbindung ist mechanisch robust, ermöglicht eine gute Abschottung der Kontakte gegenüber Umwelteinflüssen und kann dennoch leicht in axialer Richtung (bezogen auf den gebildeten Kreisring) getrennt werden. Beispielsweise kann der Steckabschnitt einen zylinderförmigen Schaft aufweisen, der in eine Schaftaufnahme des Aufnahmeabschnitts eingesteckt ist. Zur Abdichtung kann ein Dichtungsring in eine Nut des Schafts eingesetzt sein.

Wenn zwei Segmente eingesetzt werden, können entweder beide Verbindungsstellen solche Steckverbindungen sein oder nur eine der Verbindungsstellen eine Steckverbindung sein, während die andere Verbindungsstelle durch ein Scharnier gebildet ist.

In der Steckverbindung sind bevorzugt in dem einen Segment ein elektrisches Kontaktelement und in dem anderen Segment ein elektrisches Gegenkontaktelement als Kontakte der mindestens einen Verbindungsstelle angeordnet. Eine vorteilhafte Ausgestaltung des Kontakts ergibt sich, wenn das elektrische Kontaktelement eine einfedernde Kontaktspitze aufweist, mit dem es eine Kontaktfläche des Gegenkontaktelements kontaktiert.

Diese Ausgestaltung von Kontaktelement und Gegenkontaktelement stellt einerseits einen guten Kontakt zwischen beiden Elementen her, der andererseits bei Öffnung der Verbindungsstelle definiert unterbrochen wird. Ein Öffnungspunkt kann durch Dimensionierung des Federwegs der einfedernden Kontaktspitze beeinflusst werden. Es kann so erreicht werden, dass bereits bei einer Öffnung der Verbindungstelle um einen oder wenige Millimeter die elektrische Verbindung zwischen dem Kontaktelement und dem Gegenkontaktelement unterbrochen wird. Alternativ ist auch der Einsatz eines Kontaktsystems mit einem Stiftkontakt und einer Buchsenkontakt möglich.

Um die mindestens eine Verbindungstelle kraftschlüssig geschlossen zu halten, kann an der Verbindungsstelle zwischen den benachbarten Segmenten bevorzugt eine Rastverbindung oder eine Verbindung über Magnetkraft vorgesehen sein. Die Magnetkraft kann durch zwei miteinander wechselwirkende Magnete oder einen Magnet und ein ferromagnetisches Element erzielt werden. Dabei kann vorgesehen sein, dass die Magnete bzw. der Magnet und das ferromagnetische Element im geschlossenen Zustand der Verbindungsstelle unmittelbar aufeinander liegen und elektrisch kontaktieren. Sie können in dem Fall selbst als Kontakte der Leiterschleife dienen, über die die Öffnung der Verbindungsstelle detektiert wird.

In einer weiteren vorteilhaften Ausgestaltung des Überwachungsaufsatzes ist in einem der Segmente eine Leiterkarte angeordnet, von der aus Leiterabschnitte zu den Kontakten der mindestens einen Verbindungsstelle führen, wobei die Leiterabschnitte und die Kontakte die Leiterschleife bilden. Die Leiterabschnitte können dabei Kabel oder Leiterbahnen auf der genannten oder einer weiteren Leiterkarte sein. An der Leiterkarte ist bevorzugt ein Anschlusskabel und/oder ein Anschlussstecker angeordnet, das oder der mit der Leiterschleife verbunden ist, um den Zustand der Leiterschleife und damit der überwachten Mutter durch eine externe Auswerteeinheit ermitteln zu können. Eine solche drahtgebundene Auswertung bietet den Vorteil, auf einfache Weise mehrere der gezeigten Überwachungsaufsätze in Serie zu verschalten und die Serienschaltung mit nur einer Auswerteeinheit zu verbinden. Durch die Art der Verschaltung wird eine Kontaktunterbrechung eines jeden beteiligten Überwachungsaufsatzes mit nur einer Überwachungseinrichtung detektiert. Alternativ ist es auch möglich, auf der Leiterkarte einen Funksender anzuordnen, der ein Signal über eine geschlossene bzw. eine geöffnete Leiterschleife drahtlos an eine externe Empfangsstation übermittelt.

In einer Weiterbildung des Überwachungsaufsatzes ist auf der Leiterkarte eine Leuchtdiode (LED) angeordnet, die parallel zur Leiterschleife geschaltet ist. Tritt bei dem Überwachungsaufsatz eine Unterbrechung der Leiterschleife auf, kommutiert ein Messstrom auf die LED, die aufleuchtet und so die Unterbrechung der zugeordneten Leiterschleife signalisiert. Insbesondere bei mehreren, in Serie geschalteten Überwachungsaufsätzen wird so vorteilhaft auf einen Blick ersichtlich, welcher Überwachungsaufsatz ausgelöst hat.

In einer Ausgestaltung, in der die Segmente ein zu einer Seite offenes Gehäuse aufweisen, kann dieses bevorzugt mit einer Vergussmasse, insbesondere Gießharz, verfüllt sein, wobei die Leiterkarte und die Leiterabschnitte in das Gießharz eingebettet sein können, um vor Umwelteinflüssen möglichst gut geschützt zu sein. Bevorzugt wird dazu eine durchscheinende Vergussmasse genutzt, wodurch von der LED emittiertes Licht von außen sichtbar ist, ohne dass spezielle Lichtleitelemente vorhanden sein müssen. Es ist lediglich eine kleine Öffnung im Gehäuse des Segments oberhalb der LED vorzusehen.

In einer weiteren vorteilhaften Ausgestaltung weist der Überwachungsaufsatz ein Verbindungskabel zu einem weiteren Überwachungsaufsatz auf. Es kann so eine Kette von untereinander serienverschalteten Überwachungsaufsätzen gebildet werden, um mit einer Überwachungseinrichtung, die mit dem Anfang der Kette mit einem Anschlusskabel verbunden ist, mehrere Muttern überwachen zu können.

Die Erfindung wird nachfolgend anhand von Ausführungsbeispielen mithilfe von Figuren näher erläutert. Die Figuren zeigen:
- Figur 1a: eine isometrische Darstellung eines Überwachungsaufsatzes in einem ersten Ausführungsbeispiel aufgesetzt auf eine Mutter in einem geschlossenen Zustand;
- Figur 1b: der Überwachungsaufsatz gemäß Figur 1a in einem geöffneten Zustand;
- Figuren 2a, b: jeweils eine Draufsicht auf den Überwachungsaufsatz der Figuren 1a, b in einem geschlossenen bzw. geöffneten Zustand;
- Figur 3a, b: jeweils eine isometrische Darstellung des Überwachungsaufsatzes des ersten Ausführungsbeispiels in einem geschlossenen bzw. geöffneten Zustand in einer isometrischen Darstellung ohne Mutter und einer isometrischen Ausschnittsvergrößerung;
- Figur 4: eine Explosionsdarstellung des Überwachungsaufsatzes des ersten Ausführungsbeispiels mit Mutter;
- Figuren 5a, b: jeweils eine isometrische Darstellung des Überwachungsaufsatzes im geschlossenen bzw. geöffneten Zustand ohne Muttern mit Blickrichtung auf die Unterseite;
- Figur 6: eine detaillierte Schnittzeichnung durch einen Verbindungsbereich des Überwachungsaufsatzes des ersten Ausführungsbeispiels;
- Figur 7: eine isometrische Darstellung eines auf eine Mutter aufgesetzten Überwachungsaufsatzes in einem zweiten Ausführungsbeispiel in einem geschlossenen Zustand;
- Figuren 8a, b: jeweils eine Draufsicht auf den Überwachungsaufsatz gemäß Figur 7 in einem geschlossenen bzw. einem geöffneten Zustand;
- Figur 9a: eine isometrische Darstellung des Überwachungsaufsatzes des zweiten Ausführungsbeispiels ohne Mutter mit einer Ausschnittsvergrößerung eines Verbindungsbereichs;
- Figur 9b: eine isometrische Darstellung des Überwachungsaufsatzes des zweiten Ausführungsbeispiels ohne Mutter in einem geöffneten Zustand;
- Figur 10: eine isometrische Explosionsdarstellung des Überwachungsaufsatzes des zweiten Ausführungsbeispiels mit Mutter;
- Figuren 11a, b: jeweils eine isometrische Darstellung von zwei gekoppelten Überwachungsaufsätzen in einem dritten Ausführungsbeispiel, aufgesetzt auf jeweils eine Mutter; und
- Figur 12: zwei über ein Verbindungskabel gekoppelte Segmente der Überwachungsaufsätze der Figuren 11a, b.

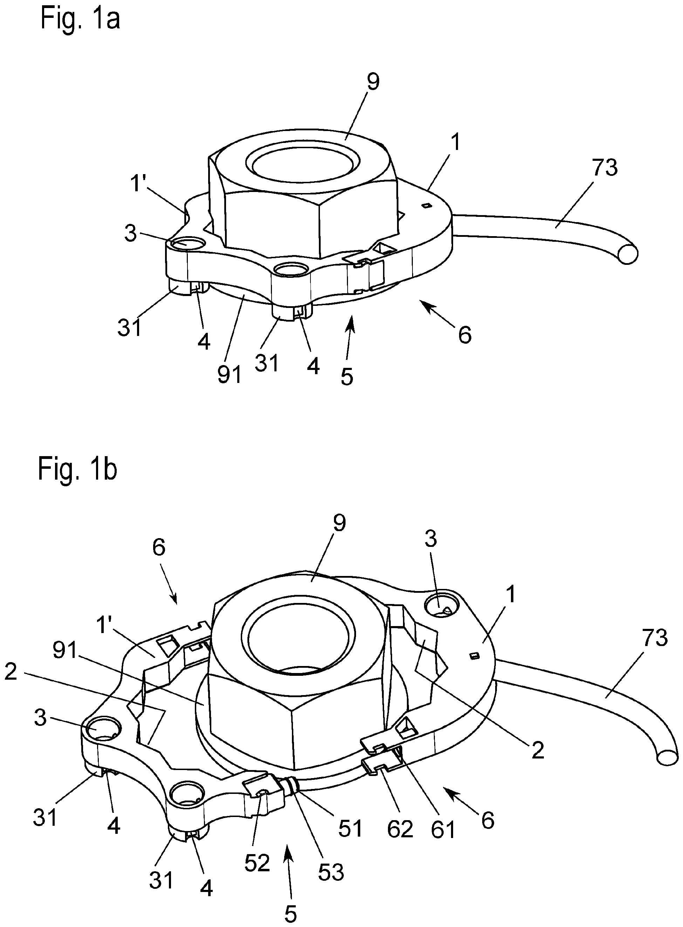

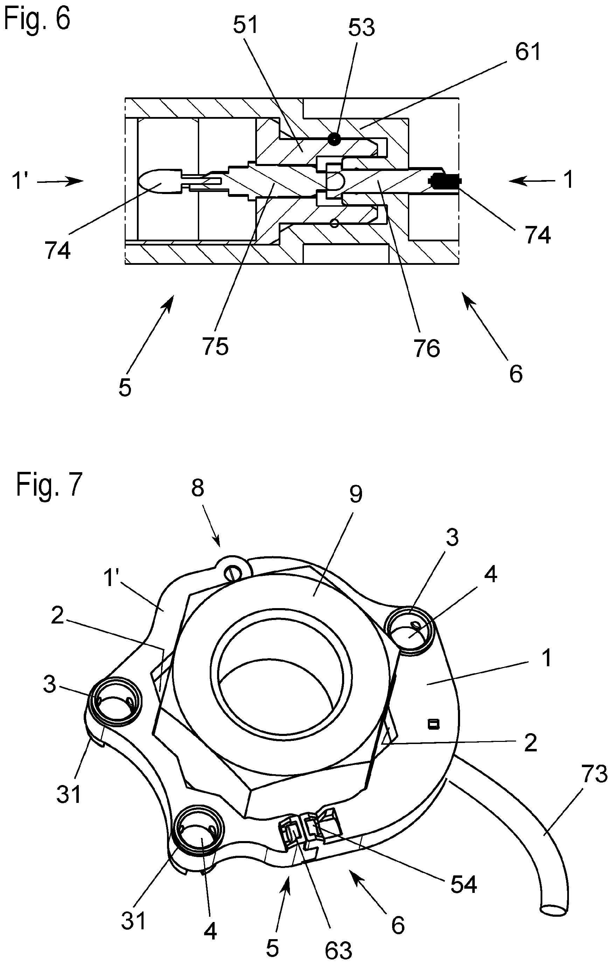

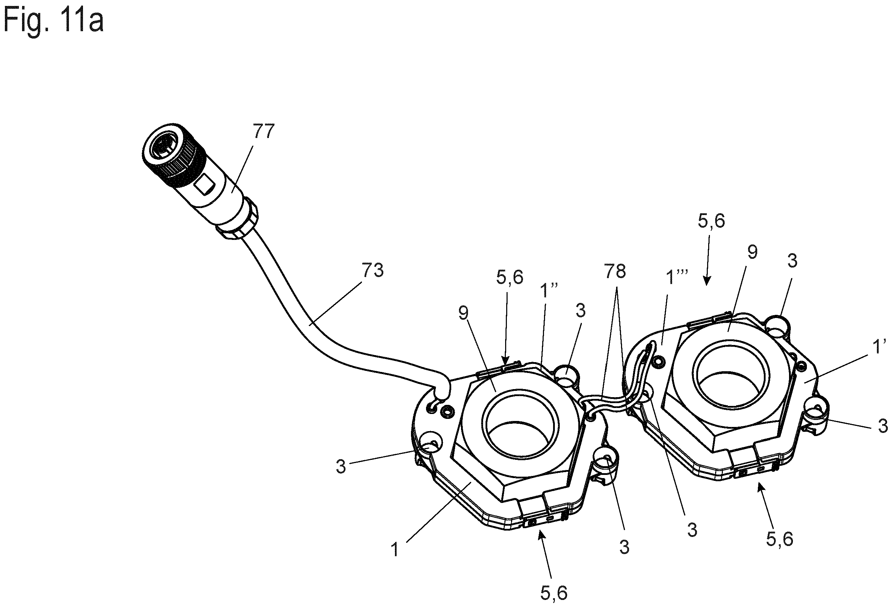

In den nachfolgend beschriebenen Figuren sind drei Ausführungsbeispiele erfindungsgemäßer Überwachungsaufsätze dargestellt. Die Figuren 1a - 6 zeigen ein erstes Ausführungsbeispiel, die Figuren 7 - 10 ein zweites Ausführungsbeispiel und die Figuren 11a - 12 ein drittes Ausführungsbeispiel in jeweils verschiedenen Darstellungen.

In allen Figuren kennzeichnen gleiche Bezugszeichen gleiche oder gleich wirkende Elemente. Aus Gründen der Übersichtlichkeit ist zudem nicht in jeder Figur jedes Bezugszeichen dargestellt. Ebenfalls aus Gründen der Übersichtlichkeit ist ein Anschlusskabel (Bezugszeichen 73) bzw. ein Anschlussstecker (Bezugszeichen 77) nicht in allen Figuren wiedergegeben. Es versteht sich, dass dieses in jedem Fall in der in einigen Figuren gezeigten oder einer abgewandelten Form vorhanden sein kann.

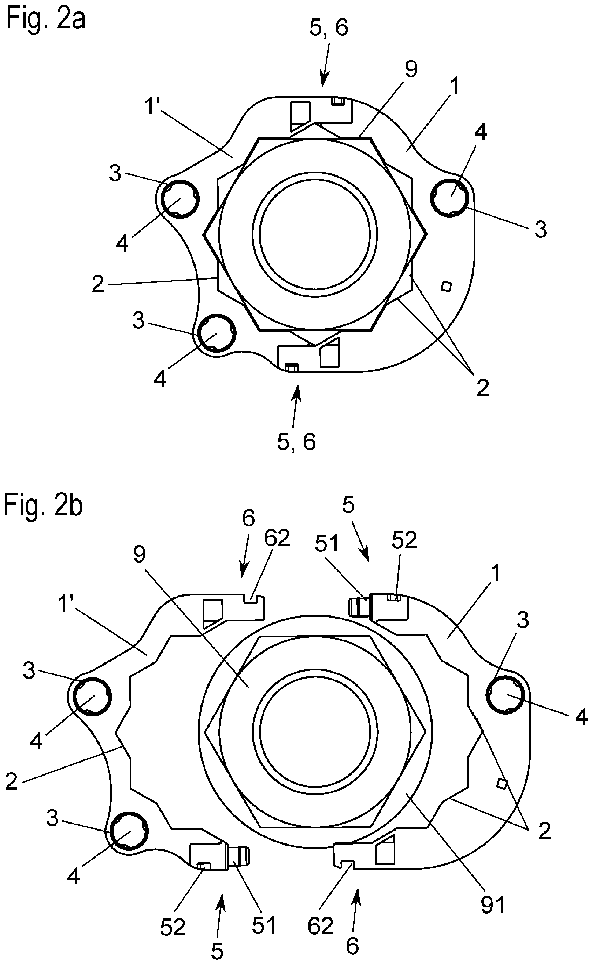

In den Figuren 1a, b und 2a, b ist ein erstes Ausführungsbeispiel eines Überwachungsaufsatzes für eine Mutter 9 zusammen mit dieser Mutter in isometrischen Darstellungen bzw. in einer Draufsicht wiedergegeben. Die Figuren mit dem Index "a" zeigen den Überwachungsaufsatz jeweils in einem geschlossenen und betriebsbereiten Zustand. Die Figuren mit dem Index "b" zeigen den Überwachungsaufsatz in einem geöffneten Zustand, beispielsweise bei Montage an oder Demontage von der Mutter 9. Die Mutter 9 ist beispielsweise eine Mutter einer Schraubverbindung einer Flanschbefestigung in einer Windkraftanlage. Solche Muttern können beispielsweise die Größe M30 oder M36 haben.

Anstelle der Mutter 9 kann mit dem erfindungsgemäßen Überwachungsaufsatz natürlich ebenso ein Schrauben- oder Bolzenkopf einer Schraubverbindung überwacht werden. In diesem Sinne sind Muttern und Schrauben- oder Bolzenköpfe im Rahmen der Erfindung als synonym anzusehen.

Der Überwachungsaufsatz weist zwei halbringförmige Segmente 1, 1' auf, die die Mutter 9 an ihrem Umfang radial umgeben. Die Segmente 1, 1' sind bevorzugt Kunststoffelemente, die einstückig z. B. in einem Kunststoffspritzgussverfahren hergestellt sind.

Durch die Form als Halbringe ergänzen sich die beiden Segmente 1, 1' in dem geschlossenen Zustand zu einem die Mutter 9 radial umfassenden Ring. An der der Mutter 9 zugewandten Innenseite sind die Segmente 1, 1' mit Innenverzahnungen 2 versehen, die im zusammengesetzten Zustand ein regelmäßiges Zwölfeck bilden. Alternativ kann anstelle eines Zwölfecks auch ein regelmäßiges Sechseck gebildet werden, das die Außenkontur der Mutter 9 widerspiegelt. Die Ausgestaltung als Zwölfeck ermöglicht es, den Überwachungsaufsatz in 30°-Schritten gedreht auf die Mutter 9 aufzusetzen. Bei Ausgestaltung mit einer sechseckigen Innenkontur ist ein Aufsetzen in 60°-Schritten möglich. In beiden Fällen umschließt die zusammengesetzten Segmente 1, 1' die Mutter 9 eng, d. h. mit geringem Spiel und bevorzugt zumindest punktuell formschlüssig, so dass eine Formänderung der Mutter 9 durch Deformation, Bruch oder Rissbildung zu einer Krafteinwirkung auf die Segmente 1, 1' führt.

Bei dem dargestellten Ausführungsbeispiel sind in den Segmenten 1, 1' Aufnahmen 3 für Magnete 4 ausgebildet. Über die Magnete 4 kann der Überwachungsaufsatz in einem Bereich neben der Mutter 9 auf z. B. dem Flansch, durch den die Schraubverbindung führt, befestigt werden. Der Überwachungsaufsatz ist vorliegend dazu ausgebildet, auf eine Mutter 9 mit Unterlegscheibe 91 aufgesetzt zu werden. Die Magnetaufnahmen 3 sind zu diesem Zweck so positioniert, dass die Magnete 4 neben der Unterlegscheibe 91 auf dem Bauteil, z. B. dem Flansch, aufliegen. Dazu weisen die Magnetaufnahmen 3 jeweils einen Dom 31 auf, der nach unten über den sonstigen Begrenzungsrand des Segments 1, 1' hinausragt. Im gezeigten Beispiel sind in dem Segment 1, 1' zwei Magnete 4 angeordnet und in dem Segment 1 ein Magnet 4. Die Anzahl und Aufteilung der Magnete 4 kann in alternativen Ausgestaltungen demgegenüber variieren.

Erfindungsgemäß ist mindestens bei einer Verbindungsstelle zwischen den Segmenten 1, 1' eine kraftschlüssig geschlossene Verbindung vorgesehen, die bei einem Bruch, einem Riss und/oder einer sonstigen Beschädigung oder Deformation der Mutter 9 geöffnet wird, wodurch ein elektrischer Kontakt, der innerhalb der Verbindung etabliert ist, unterbrochen wird. Dabei wird die Verbindung gegen eine Zuhaltekraft zerstörungsfrei geöffnet, so dass nach einem Tauschen der beschädigten Mutter 9 der Überwachungsaufsatz auf die neue Mutter 9 aufgesetzt werden kann, wobei die Verbindung wieder geschlossen wird, die elektrische Verbindung wieder hergestellt wird und der Überwachungsaufsatz wieder einsatzbereit ist.

Im vorliegenden Ausführungsbeispiel sind die Segmente 1, 1' an beiden Verbindungsstellen an den radialen Enden der Segmente 1, 1' über jeweils eine Steckverbindung miteinander elektrisch und mechanisch verbunden. Die Steckverbindung ist durch das Zusammenspiel eines Steckabschnitts 5 und eines Aufnahmeabschnitts 6 gebildet. Die Segmente 1, 1' sind im gezeigten Ausführungsbeispiel bezüglich der Steckverbindungen spiegelbildlich ausgebildet, indem jedes Segment 1, 1' an einem radialen Ende einen Steckabschnitt 5 und an dem anderen radialen Ende einen Aufnahmeabschnitt 6 aufweist.

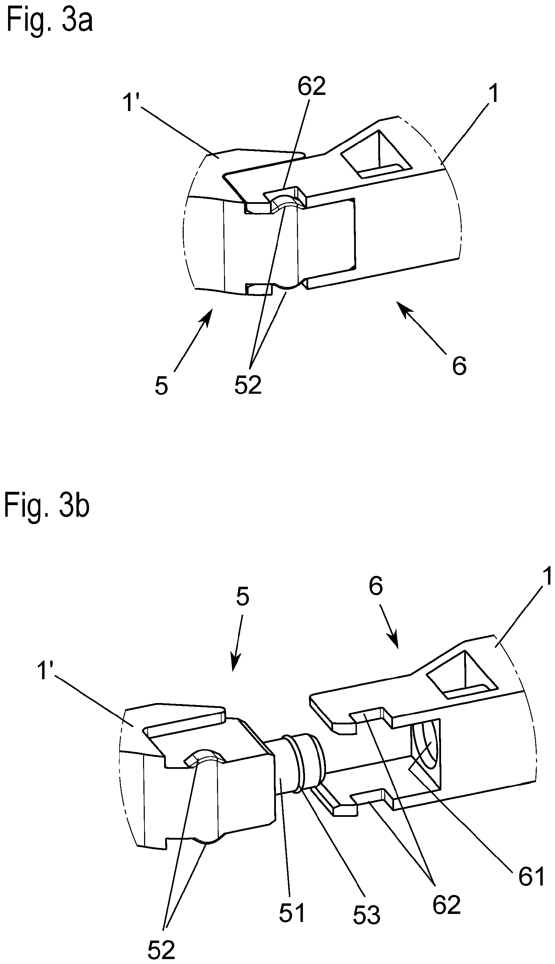

Detaillierter ist die Steckverbindung zwischen den Segmenten 1, 1' in Detailvergrößerung in den Figuren 3a und 3b zu sehen.

Der Steckabschnitt 5 umfasst einen hervorstehenden Schaft 51 sowie ein Rastelement 52. Der Schaft 51 ist im vorliegenden Ausführungsbeispiel mit einem umlaufenden Dichtungsring 53 versehen, um ein Eindringen von Feuchtigkeit in die Steckverbindung zu verhindern.

Der Aufnahmeabschnitt 6 weist eine korrespondierende Schaftaufnahme 61 auf, in die der Schaft 51 eingesteckt werden kann. Zudem sind Gegenrastelemente 62 vorgesehen, die im eingesteckten Zustand mit den Rastelementen 52 verrasten und die Steckverbindung mechanisch im geschlossenen Zustand fixieren. Die Fixierung ist dabei so ausgelegt, dass die Steckverbindung sicher im geschlossenen Zustand gehalten wird und dass in einem Normalbetrieb der überwachten Vorrichtung auf die Segmente 1, 1` wirkende Kräfte, beispielsweise Beschleunigungskräfte, die Steckverbindung nicht öffnen. Bei einem Bruch oder einer sonstigen Beschädigung der Mutter 9 werden der Steckabschnitt 5 und der Aufnahmeabschnitt 6 zumindest teilweise gegen die Rastkräfte voneinander wegbewegt, also die Steckverbindung geöffnet, was zerstörungsfrei erfolgt.

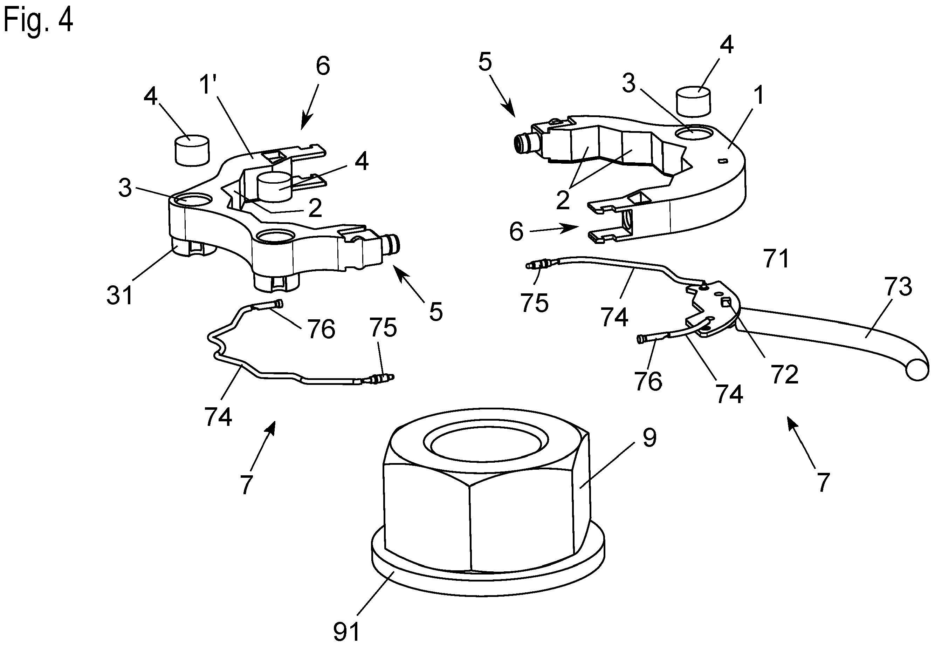

In Figur 4 ist der Überwachungsaufsatz mit Mutter 9 und Unterlegscheibe 91 des ersten Ausführungsbeispiels in einer isometrischen Explosionszeichnung dargestellt.

Gut zu erkennen sind in dieser Darstellung die Magnete 4, die in die Magnetaufnahmen 3 eingesetzt werden. Weiter ist in dieser Darstellung eine Leiter- und Kontaktanordnung 7 erkennbar, die eine durch beide Segmente 1, 1' verlaufende Leiterschleife umfasst, die beim Öffnen einer der Steckverbindungen unterbrochen wird.

Die Leiter- und Kontaktanordnung 7 weist eine Leiterkarte 71 auf, die in das Segment 1 eingesetzt wird. Auf der Leiterkarte 71 ist eine Signal-Leuchtdiode (LED) 72 angeordnet, deren Funktion nachfolgend noch erläutert wird. Weiter ist an der Leiterkarte 71 ein Anschlusskabel 73 montiert, das die beiden Enden der Leiterschleife aus dem Überwachungsaufsatz zu einer externen Auswerteanordnung weiterleitet. Im dargestellten Beispiel ist das Anschlusskabel 73 unmittelbar an der Leiterkarte 71 befestigt, insbesondere angelötet. In alternativen Ausgestaltungen kann stattdessen ein Steckverbinder an der Leiterkarte 71 montiert sein, in den das Anschlusskabel 73 dann eingesteckt wird.

Weiter gehen von der Leiterkarte 71 zwei Leiterabschnitte 74 aus, die in einem Kontaktelement 75 bzw. einem Gegenkontaktelement 76 enden. Die Leiterabschnitte 74 verlaufen innerhalb des Segments 1 bis zum Steckabschnitt 5 bzw. dem Aufnahmeabschnitt 6. In den Steckabschnitt 5 ist das Kontaktelement 75 als Kontakt eingesetzt und in den Aufnahmeabschnitt 6 das Gegenkontaktelement 76. In dem dargestellten Beispiel sind die Leiterabschnitte 74 durch Kabel, z. B. Litzenleiter, gebildet. Alternativ können alle oder einige der Leiterabschnitte 74 auch als Leiterbahnen der Leiterkarte 71 oder einer weiteren Leiterkarte oder in Form von Stromschiene und/oder einem Stanzgitter oder einem anderen Leiter zu der Verbindungsstelle geführt sein.

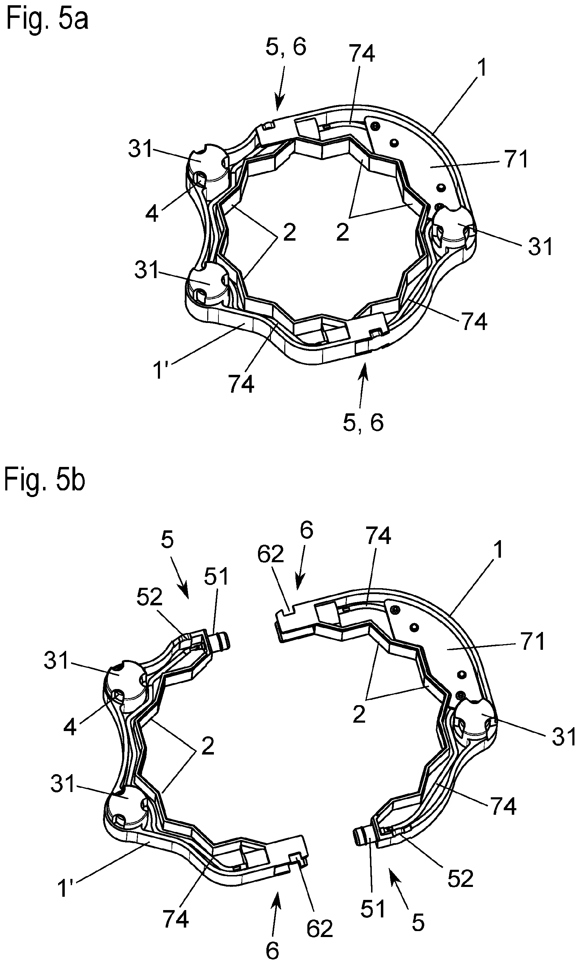

Die Positionierung der Leiterkarte 71 im Segment 1 ist in den Figuren 5a bzw. 5b ersichtlich. Die beiden Figuren zeigen den Überwachungsaufsatz im geschlossenen bzw. geöffneten Zustand der Steckverbindungen in einer isometrischen Ansicht mit Blick auf die Unterseite, also die Seite, die z. B. auf dem Flansch aufliegt. Die Segmente 1, 1' sind nach unten offen ausgebildet, was ein Erstellen in einem Stück in einem Spritzgussverfahren vereinfacht. Nach dem Einlegen der Komponenten kann der verbleibende Hohlraum mit einem elektrisch isolierenden Gießharz ausgefüllt werden, wodurch die Komponenten der Leiter- und Kontaktanordnung 7 zum einen mechanisch fixiert, und zum anderen vor dem Eindringen von Feuchtigkeit oder sonstigen korrosiven Medien geschützt werden.

Figur 6 zeigt in einer Schnittdarstellung Details des Kontaktbereichs bei ineinander gestecktem Steckabschnitt 5 und Aufnahmeabschnitt 6.

Das Kontaktelement 75 und das Gegenkontaktelement 76 sind in entsprechenden Aufnahmen im Steckabschnitt 5 und Aufnahmeabschnitt 6 zentriert eingesetzt. Das Kontaktelement 75 ist im dargestellten Ausführungsbeispiel mit einer axial einfedernden Kontaktspitze versehen, die einen Federweg in der Größenordnung von einem bis einigen Millimetern aufweist. Das Gegenkontaktelement 76 weist im Wesentlichen eine axial-flache Kontaktplatte an seinem Ende auf, gegen das die Federspitze des Kontaktelements 75 zur Kontaktierung drückt. Diese Ausgestaltung von Kontaktelement 75 und Gegenkontaktelement 76 stellt einerseits einen guten Kontakt zwischen beiden Elementen her, der andererseits bereits bei Öffnung der Verbindungsstelle um wenige Millimeter unterbrochen wird. Auf diese Weise kann ein Auseinanderdrücken oder Aufschwenken der Segmente 1, 1' gegeneinander bei einer Beschädigung der überwachten Mutter sicher detektiert werden.

Das Kontaktelement 75 und das Gegenkontaktelement 76 sind bevorzugt mit den Leiterabschnitten 74 vercrimpt oder verlötet.

In der Figur 6 ist zudem die Abdichtung zwischen dem Schaft 51 des Steckabschnitts 5 und der Schaftaufnahme 61 des Aufnahmeabschnitts 6 durch den Dichtungsring 53 gut ersichtlich.

In den Figuren 7 - 10 ist ein zweites Ausführungsbeispiel eines Überwachungsaufsatzes für eine Mutter 9 gezeigt. Wie bereits erwähnt, bezeichnen gleiche Bezugszeichen gleiche oder gleich wirkende Elemente wie beim ersten Ausführungsbeispiel.

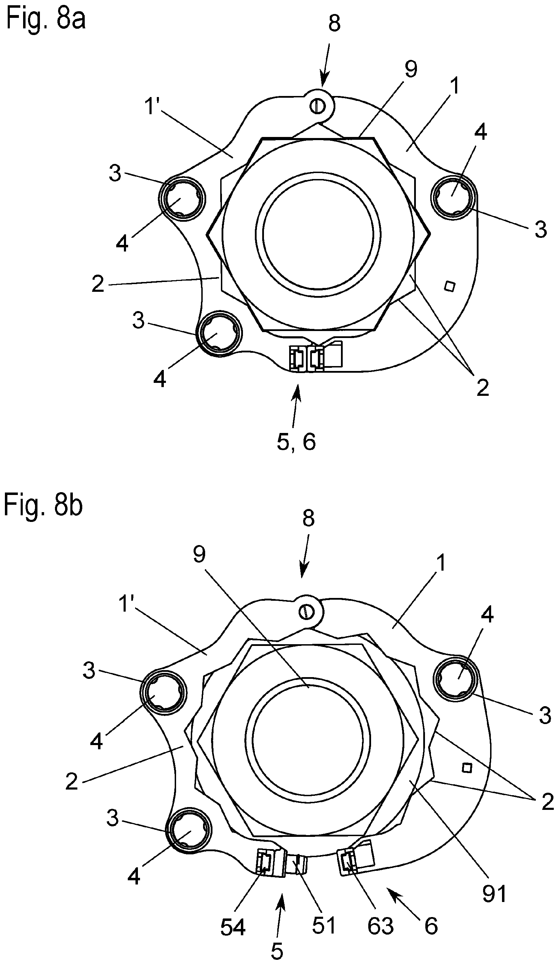

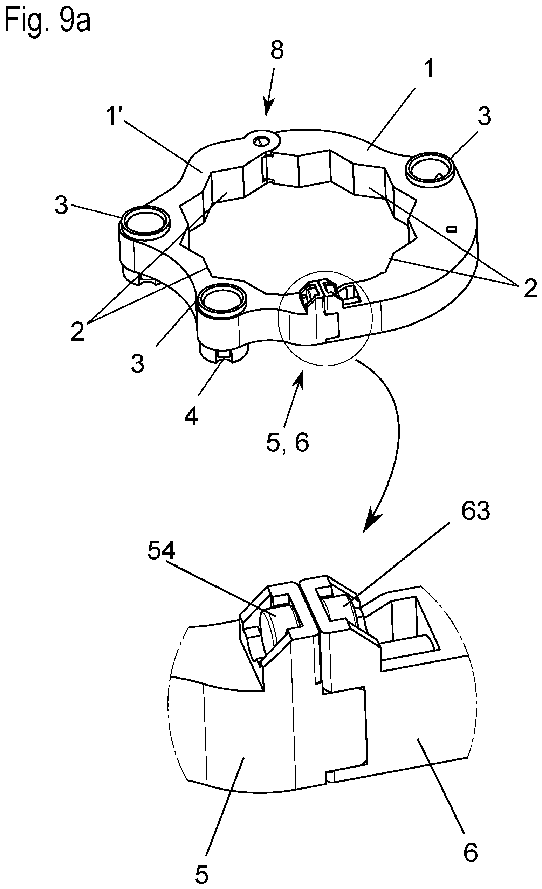

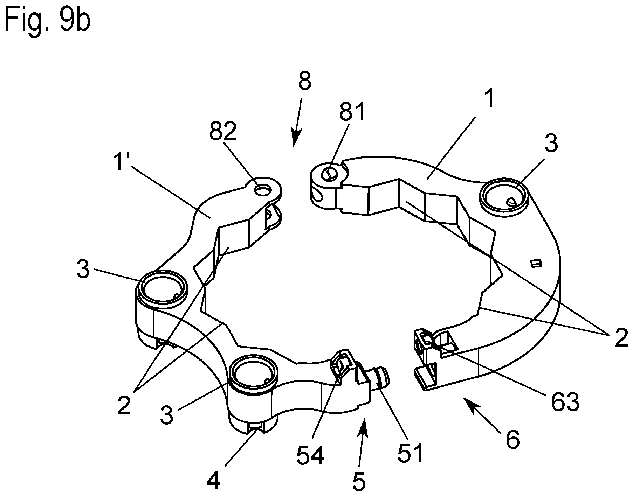

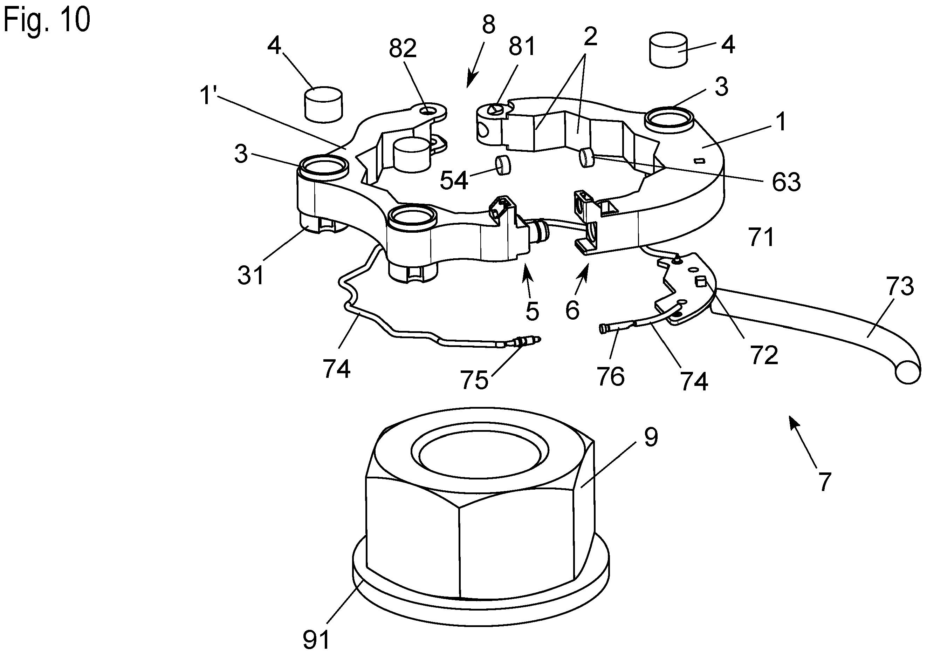

Die Figur 7 zeigt den Überwachungsaufsatz in einem geschlossenen Zustand aufgesetzt auf eine Mutter 9 in einer isometrischen Darstellung. Die Figuren 8a und 8b zeigen eine Draufsicht auf den Überwachungsaufsatz mit der Mutter 9 in einem geschlossenen bzw. geöffneten Zustand. Die Figuren 9a und 9b zeigen isometrische Ansichten des Überwachungsaufsatzes ohne Mutter in den beiden unterschiedlichen Zuständen. In Figur 9a ist der geschlossene Zustand des Überwachungsaufsatzes gezeigt und zusätzlich eine Detaildarstellung des Verbindungsbereichs wiedergegeben. In Figur 9b sind die beiden Segmente 1, 1' getrennt voneinander dargestellt. Figur 10 schließlich ist eine isometrische Explosionsdarstellung analog zu Figur 4 des ersten Ausführungsbeispiels.

In seinem Grundaufbau entspricht der Überwachungsaufsatz des zweiten Ausführungsbeispiels dem des ersten Beispiels, auf dessen Beschreibung hiermit explizit verwiesen wird. Nachfolgend werden insbesondere die Unterschiede zwischen beiden Ausführungsbeispielen erläutert.

Der Hauptunterschied zum ersten Ausführungsbeispiel liegt darin, dass eine Steckverbindung nur an einer Verbindungsstelle der Segmente 1, 1 ` vorgesehen ist, wohingegen die andere Verbindungsstelle durch ein Scharnier 8 gebildet ist. Die Funktion des Überwachungsaufsatzes ist dabei gleichbleibend - die Bildung eines Risses oder ein Bruch oder eine sonstige Beschädigung der Mutter 9 drückt die beiden zumindest punktuell eng am Umfang der Mutter 9 anliegenden Segmente 1, 1' auseinander, wodurch sich die Steckverbindung öffnet und eine im Inneren liegende Leiterschleife unterbrochen wird. Durch das Scharnier 8 wird die Bewegung der Segmente 1, 1' zueinander dabei auf eine Schwenkbewegung eingeschränkt. Wie insbesondere die Figuren 9b und 10 gut zeigen, ist das Scharnier 8 im vorliegenden Beispiel dadurch umgesetzt, dass an einem Segment Zapfen 81 ausgebildet sind, die in Lagerbohrungen 82 an dem anderen Segment 1, 1' eingreifen. Es versteht sich, dass andere Ausgestaltungen des Scharniers 8 denkbar sind. Beispielsweise kann das Scharnier 8 auch als Folienscharnier ausgebildet sein, so dass beide Segmente 1, 1' gegebenenfalls einstückig in einem Spritzgießvorgang erstellt werden können.

Da nur ein Steckabschnitt 5 bzw. Aufnahmeabschnitt 6 vorgesehen ist, wird bei der Leiter- und Kontaktanordnung 7 auch nur ein Kontaktelement 75 und ein Gegenkontaktelement 76 eingesetzt. Der beim vorliegenden Beispiel zum Gegenkontaktelement 76 führende Leiterabschnitt 74 ist entsprechend länger ausgebildet und wird durch das Scharnier 8 bzw. am Scharnier 8 vorbeigeführt.

Ein weiterer Unterschied bei dem zweiten dargestellten Ausführungsbeispiel betrifft den Verschlussmechanismus an der Steckverbindung zwischen den beiden Segmenten 1, 1'. Dieser wird vorliegend nicht über Rastelemente vorgenommen, sondern über zwei miteinander wechselwirkende Magnete 54 bzw. 63. Dazu sind benachbart zu dem Schaft 51 des Steckabschnitts 5 bzw. der Schaftaufnahme 61 des Aufnahmeabschnitts 6 Laschen vorgesehen, die im geschlossenen Zustand der Steckverbindung mit gegenüberliegenden Flächen aneinander anliegen und in die die Magnete 54 bzw. 63 eingesetzt sind. Die beiden Magnete 54 und 63 üben im geschlossenen Zustand eine Schließkraft auf die Steckverbindung aus, die einerseits eine sichere Kontaktierung zwischen dem Kontaktelement 75 und dem Gegenkontaktelement 76 bedingt und zum anderen reversibel geöffnet und wieder geschlossen werden kann.

Es versteht sich, dass diese Art der Zuhaltung zwischen den beiden Segmenten 1, 1' über die Magnete 54 und 63 auch anstelle der Rastverbindung bei dem ersten Ausführungsbeispiel eingesetzt werden kann. Umgekehrt kann bei dem vorliegenden Ausführungsbeispiel die Rastverbindung des ersten Ausführungsbeispiels umgesetzt sein.

In beiden Ausführungsbeispielen ist eine bedrahtete Verbindung des Überwachungsaufsatzes mit einer Auswerteeinheit dargestellt. Prinzipiell wäre es auch denkbar, auf der Leiterkarte 71 einen Funksender anzuordnen, der ein Signal über eine geschlossene bzw. eine geöffnete Leiterschleife der Leiter- und Kontaktanordnung 7 drahtlos an eine Empfangsstation übermittelt.

Die Ausgestaltung mit dem Anschlusskabel 73 bietet den Vorteil, auf einfache Weise mehrere der gezeigten Überwachungsaufsätze in Serie zu verschalten und die Serienschaltung mit nur einer Auswerteeinheit zu verbinden. Durch die Art der Verschaltung wird eine Kontaktunterbrechung eines jeden beteiligten Überwachungsaufsatzes mit nur einer Überwachungseinrichtung detektiert.

Die Serienverschaltung der Überwachungsaufsätze bietet sich insbesondere an, wenn eine Vielzahl von räumlich benachbarten Muttern überwacht wird, z. B. auf ein und demselben Flansch. Dabei kann die bereits genannte auf der Leiterkarte 71 angeordnete LED 72 in einfacher Weise parallel zu der jeweiligen Leiterschleife, also parallel zu den abgehenden Leiterabschnitten 74 der Leiterkarte 71 geschaltet werden, gegebenenfalls mit einem Vorwiderstand. Tritt bei dem Überwachungsaufsatz eine Unterbrechung der Leiterschleife auf, kommutiert der Messstrom auf die LED 72, die aufleuchtet und so die Unterbrechung der zugeordneten Leiterschleife signalisiert. Die Unterbrechung kann dennoch von der externen Auswerteeinheit einfach anhand einer Widerstandsänderung bzw. dem an der LED 72 auftretenden Spannungsabfall (der Diode in Durchlassrichtung) erfasst werden. Bei einer Mehrzahl von hintereinander in Serie geschalteten Überwachungsaufsätzen leuchtet die entsprechende LED 72 des Überwachungsaufsatzes, der ausgelöst hat. Auf diese Weise kann ohne großen Aufwand an Elektronik innerhalb eines Überwachungsaufsatzes dennoch eine individuelle Signalisierung erfolgen und die beschädigte Mutter schnell identifiziert werden.

Wenn zum Vergießen der Hohlräume der Segmente 1, 1' eine durchscheinende Vergussmasse genutzt wird, kann vorteilhaft die LED 72 unmittelbar auf der Leiterkarte 71 angeordnet werden. In der Oberfläche des Segments 1 ist eine Öffnung im Bereich der LED 72 vorgesehen, durch die das von der LED 72 emittierte Licht dann von außen sichtbar ist, ohne dass spezielle Lichtleitelemente vorhanden sein müssen oder die LED 72 selbst in der Öffnung positioniert sein muss. Auf diese Weise wird die durch das Gießharz erzielte Abdichtung der Leiter- und Kontaktanordnung 7 nicht beeinträchtigt. Zudem wird ein Herstellungsaufwand für den Überwachungsaufsatz verringert.

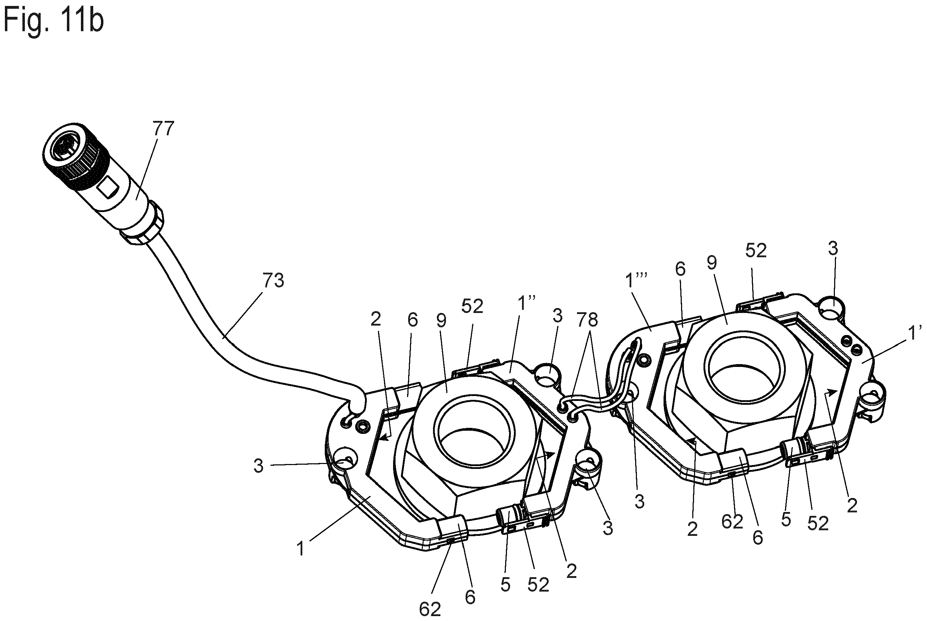

In den Figuren 11a und 11b ist ein Ausführungsbeispiel mit zwei serienverschalteten Überwachungsaufsätzen gezeigt. Figur 11a gibt einen geschlossenen und betriebsbereiten Zustand und in Figur 11b einen geöffneten Zustand, beispielsweise während der Montage bzw. Demontage, wieder.

Das Ausführungsbeispiel ist in besonderer Weise für eine Serienverschaltung mehrerer Überwachungsaufsätze ausgelegt. Beispielhaft sind in den Figuren 11a, b zwei Überwachungsaufsätze auf zwei unterschiedlichen Muttern 9 gezeigt. Die dargestellte Anordnung kann auf eine beliebige Anzahl von weiteren Überwachungsaufsätzen und damit überwachten Muttern 9 ausgedehnt werden, wie nachfolgend auch noch erläutert wird.

Ein erster Überwachungsaufsatz, der in den Figuren 11a, b auf der linken Seite dargestellt ist, setzt sich aus zwei im Wesentlichen halbkreisförmigen Segmenten 1 und 1" zusammen, ein zweiter Überwachungsaufsatz ist rechts dargestellt und setzt sich aus zwei Segmenten 1‴ und 1' zusammen. An den Segmenten sind Magnetaufnahmen 3 ausgebildet, in die jeweils ein hier nicht gezeigter Magnet 4 einsetzbar ist, mit dem die Überwachungsaufsätze im montierten Zustand fixiert werden, z. B. auf einem unterliegenden Bauteil wie einem Flansch.

Wie beim ersten Ausführungsbeispiel sind die jeweils einen Überwachungsaufsatz bildenden Segmente 1, 1" bzw. 1‴ und 1' an ihren beiden Endabschnitten miteinander verbindbar bzw. voneinander trennbar und weisen zu diesem Zweck Steckabschnitte 5 bzw. Aufnahmeabschnitte 6 mit elektrischen Kontakten auf.

Anders als beim ersten Ausführungsbeispiel sind vorliegend beide Steckabschnitte an einem der Segmente, hier am Segment 1" ausgebildet und die beiden Aufnahmeabschnitte 6 an dem anderen Segment, hier dem Segment 1. Eine insoweit spiegelbildliche Ausgestaltung, bei der jedes Segment jeweils einen Steckabschnitt 5 und ein Aufnahmeabschnitt 6 aufweist, ist hierbei genauso denkbar.

Es werden jeweils ein Steckabschnitt 5 und ein Aufnahmeabschnitt 6 ineinandergesteckt, wobei eine elektrische Verbindung zwischen hier nicht sichtbaren Leiter- und Kontaktanordnungen etabliert wird. Wie bei den zuvor gezeigten Ausführungen verrasten Steckabschnitte 5 und Aufnahmeabschnitt 6 miteinander, jedoch so, dass sie sich bei größerer Kraft, z.B. einem Mutternbruch, voneinander lösen. Dazu ist am Steckabschnitt 5 ein Rastelement 52 ausgebildet, das vorliegend in Art einer Wippe über einen Steg am Segment 1" bzw. 1' angeordnet ist. Eine in Einsteckrichtung nach vorne weisende Zunge des Rastelements 52 verrastet beim Einstecken mit einem Gegenrastelement 62 des Aufnahmeabschnitts 6. Das Gegenrastelement 62 ist beispielsweise in Form einer Verdickung am Aufnahmeabschnitt 6 ausgebildet. Durch Druck auf einen in Einsteckrichtung hinten liegenden Entriegelungsabschnitt 55 des Rastelements 52 wird der vordere, verrastende Abschnitt des Rastelements 52 angehoben und die Verrastung mit dem Gegenrastelement 62 gelöst. Dieses kann genutzt werden, um den Überwachungsaufsatz zu öffnen, beispielsweise zu Wartungszwecken oder zum Austausch. Alternativ ist anstelle der Verrastung auch eine magnetisch fixierte Steckverbindung möglich, wie sie beim zweiten Ausführungsbeispiel gezeigt ist.

Wie bei den zuvor gezeigten Überwachungsaufsätzen weist das Segment 1 auch hier eine Leiter- und Kontaktanordnung auf, die über ein Anschlusskabel 73 und einen hier dargestellten Anschlussstecker 77 mit einer Überwachungsvorrichtung verbunden werden kann.

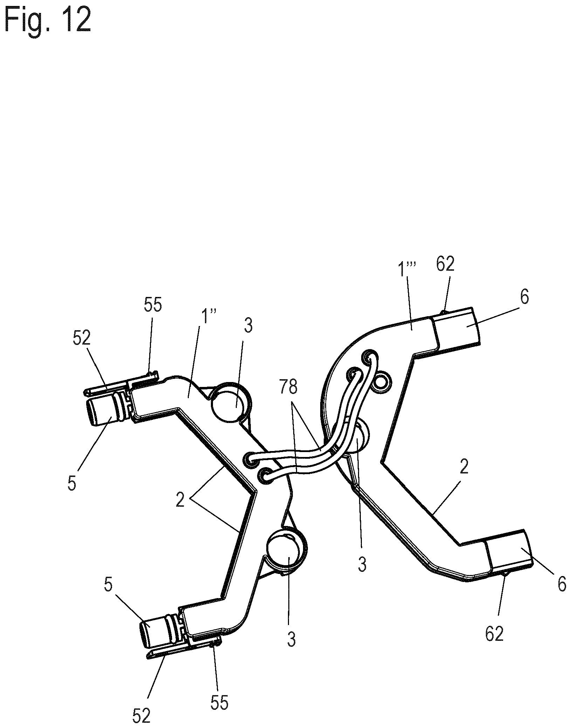

Aus dem Segment 1" führen Anschlüsse in Form eines Verbindungskabels 78 heraus, hier durch zwei separate Leiter gebildet, die das Segment 1" mit dem ersten Segment 1‴ des zweiten Überwachungsaufsatzes verbinden. Es ist so ein Mittelelement gebildet, das aus den beiden miteinander verbundenen Segmenten 1" und 1‴ besteht. Figur 12 zeigt dieses Mittelelement nochmals detaillierter separat von den überwachten Muttern 9.

Das erste Segment 1‴ des zweiten Überwachungsaufsatzes ist bis auf die Art des Anschlusses (Verbindungskabel 78 anstelle des Anschlusskabels 73) gleich dem ersten Segment 1 des ersten Überwachungsaufsatzes ausgebildet. Es weist folglich wiederum die beiden Aufnahmeabschnitte 6 auf, die mit Steckabschnitten 5 des weiteren Segments 1' verbunden werden können.

Das im gezeigten Beispiel durch die beiden separaten Leiter gebildete Verbindungskabel 78 kann in einer alternativen Ausgestaltung zum Schutz vor Abrieb und/oder Abriss auch umhüllt sein, z.B. durch einen Schrumpfschlauch, durch Federn, durch einen Kabelmantel und/oder durch einen Spiralschutz. In einer weiteren Ausgestaltung können Mittel vorgesehen sein, um das Verbindungskabel 78 an einem oder beiden Überwachungsaufsätzen, die es verbindet, zu fixieren und/oder zwischen den Überwachungsaufsätzen zu straffen. Auch das dient einem Schutz des Verbindungskabels, z.B. gegenüber einem Abrieb. Dieses kann insbesondere bei sich bewegenden Überwachungsaufsätzen relevant sein, z.B. bei Überwachungsaufsätzen, die an sich drehenden Flanschverbindungen von Windenergieanlagen montiert sind. Die Mittel zum Fixieren und/oder Straffen können beispielsweise Bohrungen oder Ösen sein, die in oder an den Segmenten 1", 1‴ ausgebildet sind.

Im dargestellten Beispiel ist das Segment 1' mit einer geschlossenen Leiter- und Kontaktanordnung, bei der die beiden Steckabschnitte 5 unmittelbar miteinander verbunden sind, versehen. Dieses Segment 1' könnte auch unmittelbar in das Segment 1 eingesteckt werden, wodurch ein einzelner, über das Anschlusskabel 73 anschließbarer Überwachungsaufsatz gebildet wäre. Vom grundsätzlichen Aufbau her entspricht das Segment 1' dem Segment 1", mit dem Unterschied, dass kein Verbindungskabel vorgesehen ist und stattdessen Kontakte in den beiden Aufnahmeabschnitten 6 unmittelbar über einen Leiter miteinander elektrisch leitend verbunden sind.

Beim dargestellten Beispiel ist stattdessen durch das Mittelelement, das aus den beiden miteinander gekoppelten Segmenten 1" und 1‴ besteht, eine Kette der beiden Überwachungsaufsätze gebildet. Durch Einsatz weiterer derartiger Mittelelemente wäre die Kette der Überwachungsaufsätze entsprechend verlängerbar. Über die dargestellte Kette wird ein geschlossener Stromkreis von der (in den Figuren) oberen Hälfte des Segments 1 über die obere Hälfte des Segments 1", die obere Hälfte des Segments 1‴, das Segment 1', die untere Hälfte des Segments 1‴, die untere Hälfte des Segments 1" und die untere Hälfte des Segments 1 gebildet, wobei dieser Stromkreis geöffnet wird, wenn jede der vier gezeigten Steckverbindungen zwischen Steckabschnitt 5 und Aufnahmeabschnitt 6 z. B. durch Bruch einer der Muttern 9 geöffnet wird.

Die zuvor gezeigten Ausführungsbeispiele weisen jeweils genau zwei Segmente 1, 1' bzw. 1' und 1" sowie 1‴ und 1' auf. Alternativ ist auch eine Ausführung mit mehr als zwei Segmenten möglich, die zusammengesetzt die Mutter 9 an ihrem Umfang umschließen.

### Bezugszeichenliste

- 1, 1', 1", 1‴: Segment

- 2: Innenverzahnung

- 3: Magnetaufnahme
- 31: Dom

- 4: Magnet

- 5: Steckabschnitt
- 51: Schaft
- 52: Rastelement
- 53: Dichtungsring
- 54: Magnet
- 55: Entriegelungsabschnitt

- 6: Aufnahmeabschnitt
- 61: Schaftaufnahme
- 62: Gegenrastelement
- 63: Magnet

- 7: Leiter- und Kontaktanordnung
- 71: Leiterkarte
- 72: LED
- 73: Anschlusskabel
- 74: Leiterabschnitt
- 75: Kontaktelement
- 76: Gegenkontaktelement
- 77: Anschlussstecker
- 78: Verbindungskabel

- 8: Scharnier
- 81: Zapfen
- 82: Lagerbohrung

- 9: Mutter
- 91: Unterlegscheibe

## Patentansprüche

1. Überwachungsaufsatz zur Überwachung einer Mutter (9) einer Schraubverbindung auf Rissbildung, Deformation und/oder Bruch, wobei der Überwachungsaufsatz eine Leiterschleife aufweist, die um einen Außenumfang der Mutter (9) geführt ist und die bei einer Deformation, einem Riss und/oder einem Bruch der Mutter (9) unterbrochen wird,
**dadurch gekennzeichnet, dass**
der Überwachungsaufsatz mindestens zwei die Mutter (9) an ihrem Umfang gemeinsam umschließende Segmente (1, 1', 1", 1‴) aufweist, die an mindestens einer radialen Verbindungsstelle kraftschlüssig zusammengehalten sind, wobei die Leiterschleife an der Verbindungsstelle über Kontakte geführt ist.

2. Überwachungsaufsatz nach Anspruch 1, bei dem zwei halbkreisförmige, sich zu einem die Mutter (9) umschließenden Ring ergänzende Segmente (1, 1', 1", 1‴) und entsprechend zwei Verbindungsstellen vorhanden sind.

3. Überwachungsaufsatz nach Anspruch 1 oder 2, bei dem an der mindestens einen Verbindungsstelle eine Steckverbindung vorgesehen ist, bei der eines der Segmente (1, 1') einen Steckabschnitt (5) und ein anderes der Segmente (1, 1', 1", 1‴) einen Aufnahmeabschnitt (6) aufweist, in den der Steckabschnitt (5) einsteckbar ist.

4. Überwachungsaufsatz nach Anspruch 2 und 3, bei dem beide Verbindungsstellen Steckverbindungen sind.

5. Überwachungsaufsatz nach Anspruch 2 und 3, bei dem eine der Verbindungsstellen eine Steckverbindung ist und die andere Verbindungsstelle durch ein Scharnier (8) gebildet ist.

6. Überwachungsaufsatz nach einem der Ansprüche 3 bis 5, bei dem der Steckabschnitt (5) einen zylinderförmigen Schaft (51) aufweist, der in eine Schaftaufnahme (61) des Aufnahmeabschnitts (6) eingesteckt ist.

7. Überwachungsaufsatz nach Anspruch 6, bei dem in eine Nut des Schafts (51) ein Dichtungsring (53) eingesetzt ist.

8. Überwachungsaufsatz nach einem der Ansprüche 3 bis 7, bei dem in der Steckverbindung in dem einen Segment (1, 1', 1", 1‴) ein elektrisches Kontaktelement (75) und in dem anderen Segment (1, 1', 1", 1‴) ein elektrisches Gegenkontaktelement (76) als Kontakte der mindestens einen Verbindungsstelle angeordnet sind.

9. Überwachungsaufsatz nach Anspruch 8, bei dem das elektrische Kontaktelement (75) eine einfedernde Kontaktspitze aufweist, mit dem es eine Kontaktfläche des Gegenkontaktelements (76) kontaktiert.

10. Überwachungsaufsatz nach einem der Ansprüche 1 bis 9, bei dem die Verbindungsstelle durch eine Rastverbindung kraftschlüssig in einem geschlossenen Zustand gehalten ist.

11. Überwachungsaufsatz nach einem der Ansprüche 1 bis 10, bei dem in einem der Segmente (1, 1', 1", 1‴) eine Leiterkarte (71) angeordnet ist, von der aus Leiterabschnitte (74) zu den Kontakten der mindestens einen Verbindungsstelle führen, wobei die Leiterabschnitte und die Kontakte die Leiterschleife bilden, wobei an der Leiterkarte (71) ein Anschlusskabel (73) und/oder ein Anschlussstecker (77) angeordnet ist, das oder der mit der Leiterschleife verbunden ist.

12. Überwachungsaufsatz nach Anspruch 11, bei dem auf der Leiterkarte (71) eine LED (72) angeordnet ist, die parallel zur Leiterschleife geschaltet ist.

13. Überwachungsaufsatz nach einem der Ansprüche 1 bis 12, bei dem die Segmente (1, 1', 1", 1‴) ein zu einer Seite offenes Gehäuse aufweisen, das mit einer Vergussmasse, insbesondere einem Gießharz, verfüllt ist.

14. Überwachungsaufsatz nach Anspruch 11 und 13, bei dem die Leiterkarte (71) und die Leiterabschnitte (74) in die Vergussmasse eingebettet sind.

15. Überwachungsaufsatz nach einem der Ansprüche 1 bis 14, aufweisend ein Verbindungskabel (78) zu einem weiteren Überwachungsaufsatz.

## Claims

1. A monitoring attachment for monitoring a nut (9) of a screw connection for cracking, deformation and/or breakage, wherein the monitoring attachment has a conductor loop which is guided around an outer periphery of the nut (9) and which is interrupted in the event of deformation, cracking and/or breakage of the nut (9),
**characterized in that** the monitoring attachment has at least two segments (1, 1', 1", 1‴) which together enclose the periphery of the nut (9) and are held together frictionally at least one radial connection point, wherein the conductor loop is guided over contacts at the connection point.

2. The monitoring attachment according to claim 1, in which there are two semicircular segments (1, 1', 1", 1‴), which join to form a ring enclosing the nut (9), and accordingly two connection points.

3. The monitoring attachment according to claim 1 or 2, in which there is provided a plug-in connection at the at least one connection point, in which plug-in connection one of the segments (1, 1') has a plug section (5) and another of the segments (1, 1', 1 ", 1‴) has a receiving section (6) into which the plug section (5) can be plugged.

4. The monitoring attachment according to claim 2 and 3, in which both connection points are plug-in connections.

5. The monitoring attachment according to claim 2 and 3, in which one of the connection points is a plug-in connection and the other connection point is formed by a hinge (8).

6. The monitoring attachment according to one of claims 3 to 5, in which the plug section (5) has a cylindrical shaft (51) which is plugged into a shaft receptacle (61) of the receiving section (6).

7. The monitoring attachment according to claim 6, in which a sealing ring (53) is inserted into a groove of the shaft (51).

8. The monitoring attachment according to one of claims 3 to 7, in which, in the plug-in connection, an electrical contact element (75) is arranged in one segment (1, 1', 1", 1‴) and an electrical mating contact element (76) is arranged in the other segment (1, 1', 1 ", 1‴), as contacts of the at least one connection point.

9. The monitoring attachment according to claim 8, in which the electrical contact element (75) has a deflecting contact tip with which it contacts a contact surface of the mating contact element (76).

10. The monitoring attachment according to one of claims 1 to 9, in which the connection point is held in a closed state in a force-fitting manner by a snaplock connection.

11. The monitoring attachment according to one of claims 1 to 10, in which there is arranged in one of the segments (1, 1', 1", 1‴) a circuit board (71) from which conductor sections (74) lead to the contacts of the at least one connection point, wherein the conductor sections and the contacts form the conductor loop, wherein on the circuit board (71) there is arranged a power cable (73) and/or a power plug (77) which is connected to the conductor loop.

12. The monitoring attachment according to claim 11, in which there is arranged on the circuit board (71) an LED (72), which is connected in parallel to the conductor loop.

13. The monitoring attachment according to one of claims 1 to 12, in which the segments (1, 1', 1 ", 1‴) have a housing which is open to one side and which is filled with a casting compound, in particular a casting resin.

14. The monitoring attachment according to claim 11 and 13, in which the circuit board (71) and the conductor sections (74) are embedded in the casting compound.

15. The monitoring attachment according to one of claims 1 to 14, having a connecting cable (78) to a further monitoring attachment.

## Revendications

1. Collier de surveillance pour la surveillance des fissures, de la déformation et/ou de la rupture d'un écrou (9) d'un assemblage vissé, lequel collier de surveillance comporte une boucle de conducteur qui est passée autour d'une circonférence extérieure de l'écrou (9) et qui est coupée en cas de déformation, de déchirure et/ou de rupture de l'écrou (9), **caractérisé en ce qu'**il comporte au moins deux segments (1, 1', 1", 1‴) entourant l'écrou (9) ensemble sur sa circonférence, qui sont retenus par friction en au moins un point de liaison radial, la boucle de conducteur étant passée sur des contacts au point de liaison.

2. Collier de surveillance selon la revendication 1, dans lequel sont prévus deux segments (1, 1', 1", 1‴) en demi-cercle qui se complètent pour former un anneau entourant l'écrou (9) et deux points de liaison correspondants.

3. Collier de surveillance selon la revendication 1 ou 2, dans lequel une connexion enfichée est prévue en un point de liaison, sur laquelle un des segments (1, 1') comporte une partie de fiche (5) et un autre des segments (1, 1', 1", 1‴) une partie de prise (6) dans laquelle la partie de fiche (5) peut être insérée.

4. Collier de surveillance selon les revendications 2 et 3, dans lequel les deux points de liaison sont des connexions enfichées.

5. Collier de surveillance selon les revendications 2 et 3, dans lequel un des points de liaison est une connexion enfichée et l'autre point de liaison est formé par une charnière (8).

6. Collier de surveillance selon l'une des revendications 3 à 5, dans lequel la partie de fiche (5) présente une tige (51) cylindrique qui est insérée dans un réceptacle de tige (61) de la partie de prise (6).

7. Collier de surveillance selon la revendication 6, dans lequel un joint d'étanchéité (53) est inséré dans une rainure de la tige (51).

8. Collier de surveillance selon l'une des revendications 3 à 7, dans lequel sont disposés dans la connexion enfichée un élément de contact électrique (75) disposé dans un segment (1, 1', 1", 1‴) et un élément de contact électrique opposé (76) disposé dans l'autre segment (1, 1', 1", 1 "'), formant les contacts de l'au moins un point de liaison.

9. Collier de surveillance selon la revendication 8, dans lequel l'élément de contact électrique (75) comporte une pointe de contact à ressort avec laquelle il vient en contact avec une surface de contact du contre-élément de contact (76).

10. Collier de surveillance selon l'une des revendications 1 à 9, dans lequel le point de liaison est retenu par friction dans un état fermé par une liaison enclenchée.

11. Collier de surveillance selon l'une des revendications 1 à 10, dans lequel est disposée dans l'un des segments (1, 1', 1", 1‴) une carte de circuits (71) de laquelle des longueurs de conducteur (74) partent en direction des contacts de l'au moins un point de liaison, les longueurs de conducteur et les contacts formant la boucle de conducteur, un câble de branchement (73) et/ou un connecteur de branchement (77) connectés à la boucle de conducteur étant disposés sur la carte de circuits (71).

12. Collier de surveillance selon la revendication 11, dans lequel est disposée sur la carte de circuits (71) une DEL (72) qui est montée en parallèle avec la boucle de conducteur.

13. Collier de surveillance selon l'une des revendications 1 à 12, dans lequel les segments (1, 1', 1", 1‴) comportent un boîtier ouvert sur le côté, qui et rempli d'une masse d'enrobage, en particulier d'une résine coulée.

14. Collier de surveillance selon les revendications 11 et 13, dans lequel la carte de circuits (71) et les longueurs de conducteur (74) sont inclus dans la masse d'enrobage.

15. Collier de surveillance selon l'une des revendications 1 à 14, comportant un câble de liaison (78) vers un autre collier de surveillance.
